# EUROPÄISCHE PATENTSCHRIFT

(11) **EP 0 613 855 B1**
(45) Veröffentlichungstag und Bekanntmachung des Hinweises auf die Patenterteilung: **24.01.1996**
(21) Anmeldenummer: 94102448.1
(22) Anmeldetag: 18.02.1994
(51) Int. Cl.: B67C 3/28, G01F 23/22

(54) **Getränkefüller für durchsichtige Behälter**
Bottling machine for transparent containers
Machine d'embouteillage pour récipients transparents

(30) Priorität: 27.02.1993 DE 4306120
(43) Veröffentlichungstag der Anmeldung: 07.09.1994
(73) Patentinhaber: ORTMANN + HERBST Maschinen- und Anlagenbau GmbH, D-22309 Hamburg (DE)
(72) Erfinder: Lühmann, Peter, D-22309 Hamburg (DE); von Karstedt, Carus, D-22359 Hamburg (DE); Basler, Norbert, D-22955 Hoisdorf (DE); Kolbe, Wilfried, Dr., D-21483 Gülzow (DE)
(74) Vertreter: Schaefer, Konrad, Dipl.-Phys.

(56) Entgegenhaltungen:
- EP-A- 0 418 005
- DE-A- 3 036 294
- DE-A- 4 030 081
- FR-A- 2 582 804
- US-A- 4 206 788
- US-A- 4 582 102

## Beschreibung

Die Erfindung betrifft einen Getränkefüller nach dem Oberbegriff des Anspruches 1.

Rotierende Getränkefüller werden aus ökonomischen Gründen überwiegend an der Grenze ihrer Leistungsfähigkeit gefahren, also mit sehr hohen Verarbeitungsgeschwindigkeiten. Dabei treten Probleme auf hinsichtlich der exakten Einhaltung des gewünschten Sollpegels der Füllung in den Behältern. Aus dem Stand der Technik sind eine Vielzahl von Möglichkeiten zur Überwachung des Füllvorganges bekannt.

Aus der DE 30 36 294 A1 ist ein Füller bekannt, bei dem in den Füllorganen die Strömungsgeschwindigkeit messende Einrichtungen vorgesehen sind, die ihre Werte an eine zentrale Rechnereinheit liefern, welche den Schließzeitpunkt berechnet und zu diesem die den Getränkestrom beherrschenden Steuerorgane zum Schließen ansteuert. Zusätzlich ist am Füllerauslauf ein Füllhöhenkontrollgerät in Form einer Meßschranke vorgesehen, wodurch der Rechnereinheit Korrekturwerte zum Regeln der Füllorgane vorgegeben werden. Hierbei nachteilig ist die Notwendigkeit, an jedem Füllorgan Strömungsmeßeinrichtungen vorzusehen.

Aus der DE 31 50 183 C1 ist ein Füller bekannt, bei dem ebenfalls am Auslauf eine Füllhöhenkontrollvorrichtung vorgesehen ist. Bei dieser Konstruktion werden über eine Auswerteinrichtung solche Füllorgane ermittelt, die nicht korrekt füllen. Eine Füllhöhensteuerung ist bei dieser Konstruktion nicht vorgesehen.

Weitgehend verbreitet im Stand der Technik sind Konstruktionen gemäß DE 32 18 062 A1, bei denen jedes Füllorgan eine in den Behälter eintauchende Sonde zur Füllpegelmessung aufweist. Die Sonde steuert bei Erreichen des Stoppegels das den Getränkestrom beherrschende Steuerorgan. Auch bei dieser Konstruktion ist nachteilig der erhebliche konstruktive Aufwand an jedem der Füllorgane, die bei Füllern üblicher Konstruktion in großer Zahl vorgesehen sind.

Eine gattungsgemäße Konstruktion zeigt die DE 31 15 957 A1. Hierbei sind stationär neben dem Füller Einrichtungen zur Messung des Füllpegels in den Behältern angeordnet, mit denen die vorbeilaufenden Behälter kurzfristig erfaßt werden können. Wird in einem erfaßten Behälter das Erreichen des Stoppegels festgestellt, so wird über einen in derselben Winkelstellung wie die Meßeinrichtung angeordneten Sender ein Signal gegeben, der auf einen zu diesem Zeitpunkt unmittelbar benachbart stehenden Empfänger des zu dem Behälter gehörigen Füllorganes ein Steuersignal zum Schließen überträgt.

Eine solche Einrichtung kann nur in einer bestimmten Winkelstellung relativ zum Füller kurzzeitig einen Behälter erfassen. Wäre nur eine solche Einrichtung vorgesehen, so würde diese immer nur feststellen, daß der Füllpegel zu niedrig oder zu hoch ist. Gemäß diesem Stand der Technik müssen daher derartige Einrichtungen in großer Vielzahl nebeneinander angeordnet werden, damit in einem an einer solchen Anordnung mehrerer Einrichtungen vorbeilaufenden Behälter der langsam ansteigende Füllpegel bei Erreichen des Sollpegels von wenigstens einer der Einrichtungen erkannt werden kann.

Nachteilig auch bei dieser Konstruktion ist der große Bauaufwand durch die Vielzahl der erforderlichen komplizierten Einrichtungen sowie durch die Empfänger, die an jedem der Füllorgane vorzusehen sind.

Schließlich ist zu anderen als den genannten Zwecken die Verwendung von Videokameras mit Bildauswerteinrichtungen bekannt. Diese können beispielsweise gemäß DE 32 12 432 C2 in Inspektoren, die einem Füller vor- oder nachgeschaltet sind, Behälter auf Unversehrtheit, Füllzustand u.dgl. überwachen oder gemäß DE 40 30 081 A1 in einer einem Füller nachgeschalteten Aufschäumvorrichtung zu deren Regelung das Schaumbild in Behältern überwachen. Bei diesem Stand der Technik sind die Videokameras stets derart ausgebildet und angeordnet, daß sie immer nur einen Behälter erfassen.

Die Aufgabe der vorliegenden Erfindung besteht darin, einen Getränkefüller der eingangs genannten Art zu schaffen, bei dem mit geringem Konstruktionsaufwand hochgenau gefüllt werden kann.

Diese Aufgabe wird erfindungsgemäß mit den Merkmalen des Kennzeichnungsteiles des Anspruches 1 gelöst.

Bei dieser Konstruktion ist als Meßeinrichtung für den Füllpegel eine stationär angeordnete Videokamera vorgesehen, die in ihrem Sichtfeld mehrere Behälter gleichzeitig erfaßt. Jeder vorbeilaufende Behälter wird innerhalb des Sichtfeldes der Kamera eine Zeitlang verfolgt, und es kann während dieser Zeit kontinuierlich das Ansteigen des Füllpegels überwacht werden. Das Erreichen des Sollpegels kann also, da der Behälter während einer gewissen Zeit lückenlos überwacht wird, hochgenau zum richtigen Zeitpunkt erkannt werden. Die dazu verwendete Bildauswerteinrichtung ist an die Steuerorgane aller Füllorgane angeschlossen und kennt über entsprechende Einrichtungen oder entsprechende Bildauswertung die Stelle desjenigen Füllorganes, bei dem soeben der Stoppegel erreicht wird. Sie kann daher zum richtigen Zeitpunkt, also mit hoher Präzision dieses Füllorgan schließen. Vorteilhaft hierbei ist gegenüber dem Stand der Technik die erreichbare sehr hohe Füllgenauigkeit und der wesentlich verringerte Geräteaufwand. An den Füllorganen sind keinerlei den Füllpegel oder sonstige Füllungsparameter messende Einrichtungen erforderlich, wodurch sich die Kosten des Füllers wesentlich verringern. Videokameras mit Bildauswerteinrichtungen sind bei heutigen Computerkosten demgegenüber fast vernachlässigbar, zumal moderne Füller ohnehin bereits überwiegend mit datenverarbeitenden Steuereinrichtungen ausgerüstet sind, die für diese Zwecke ohne wesentliche Mehrkosten mitverwendbar sind. Die Ermittlung des einem erkannten Behälter zugeordneten Füllorganes ist problemlos und ohne Zusatzkosten möglich, beispielsweise durch Erkennung von optischen Marken an den Füllorganen oder durch Zählen der Füllorgane und Vergleich mit einer Festmarke am Füllerumfang. Die Videokamera mit Bildauswerteinrichtung kann außerdem in vorteilhafter Weise für sonstige Überwachungsfunktionen verwendet werden, was ohne Mehraufwand den Nutzen erhöht.

Die Bestimmung des Füllpegels in einem Behälter beim Durchlauf vor der Kamera kann kontinuierlich erfolgen oder auch nur an einzelnen Punkten.

Durch Verfolgung eines Behälters und Bestimmung mehrerer Füllpegel bei unterschiedlichen Winkelpositionen läßt sich der Füllpegel bei dazwischenliegenden Winkelpositionen interpolieren bzw. über den bestimmten Bereich hinaus extrapolieren. Es kann also die Winkelposition, bei der der Stoppegel erreicht wird, ermittelt werden, ohne an dieser Winkelposition eine Bildauswertung durchzuführen. Die Anzahl der erforderlichen Bildauswertungen kann verringert und somit die für die Bildauswertung erforderliche Rechenleistung verringert werden. Aus den Füllpegeln bei unterschiedlichen Winkelpositionen kann auch die Füllgeschwindigkeit errechnet werden. Die auf diese Weise ermittelte Füllgeschwindigkeit der Behälter kann verwendet werden beispielsweise zu einer kontinuierlichen Verstellung der zugehörigen Steuerorgane zum Erreichen gewünschter Füllgeschwindigkeitsverläufe im Behälter oder zur Ermittlung von Füllorganen mit Fehlverhalten, beispielsweise Fehlverhalten des Steuerorganes.

Vorteilhaft sind die Merkmale des Anspruches 2 vorgesehen. Hierdurch ist es möglich, bis zu einem gewissen Füllpegel schneller zu füllen und danach bis zum Erreichen des Stopppegels langsamer und somit präziser. Der niedrigere und der Stoppegel werden vorteilhaft im Sichtfeld derselben Videokamera erfaßt.

Da die Bildauswerteinrichtung im Sichtfeld der Kamera die Behälter über eine gewisse Zeit, also über einen gewissen Füllerumlaufwinkel hinweg verfolgt, wird auch bei Exemplarstreuungen der Füllorgane, also bei schneller oder langsamer füllenden Füllorganen, die den Stoppegel eher oder später erreichen, die Erkennung des Stoppegels im Sichtfeld gewährleistet. Dennoch können durch zu starke Exemplarabweichungen der Füllorgane oder insbesondere auch bei Verstellung der Füllerdrehzahl und dadurch (die Füllzeit bleibt konstant) sich verändernden, für die Füllung erforderlichen Umfangswinkeln Fälle auftreten, bei denen das Erreichen des Sollpegels außerhalb des Sichtfeldes der Kamera liegt.

Vorteilhaft sind die Merkmale des Anspruches 3 vorgesehen. Erkennt die Auswerteinrichtung beispielsweise, daß in dem von der Kamera erfaßten Bereich die Füllpegel bei allen Füllorganen noch zu niedrig liegen, so wird der Startwinkel des Füllbetriebes vorverlegt oder, wenn dies nicht mehr ausreicht, die Füllerdrehzahl verringert, bis die Kamera das Erreichen des Sollpegels feststellt. Sind die Behälter im betrachteten Bereich überfüllt, so wird der Startwinkel nach später verlegt. Dadurch wird sichergestellt, daß die Kamera stets in der Lage ist, das Erreichen des Stoppegels zu erkennen und somit das Schließen des Steuerorganes zu bewirken. Außerdem kann beispielsweise die Umstellung des Füllers auf andere Behältergrößen oder andere Flüssigkeiten, was andere Füllzeiten erfordert, vollautomatisch berücksichtigt werden.

Vorteilhaft sind dabei die Merkmale des Anspruches 4 vorgesehen. Werden die Öffnungssignale für die Steuerorgane der Füllorgane einzeln in Ahhängigkeit von der im vorherigen Umlauf festgestellten Winkelposition des Füllstops gegeben, so können auch gröbere Fertigungstoleranzen der Füllorgane auf einfache Weise berücksichtigt werden derart, daß die Füllorgane alle an derselben Winkelposition des Füllers schließen.

Vorteilhaft sind dabei die Merkmale des Anspruches 5 vorgesehen. Bei dieser Art der Steuerung des Füllbeginns, vorzugsweise mit Einzelsteuerung der Füllorgane, läßt sich der Schließzeitpunkt der Füllorgane so weit wie möglich nach hinten verlegen, also unter Berücksichtigung der für die nachfolgende Behandlung, z.B. Druckentlastung, erforderlichen Zeit der zum Füllen zur Verfügung stehende Zeitraum optimal nutzen, ohne daß es zu Fehlfüllungen aufgrund zu späten Schließens eines Füllorganes kommt.

Vorteilhaft sind die Merkmale des Anspruches 6 vorgesehen. Auf diese Weise können größere Winkelverschiebungen des zum Füllen zur Verfügung stehenden Winkelsektors des Füllers (Füllsektor) mit einer Kamera berücksichtigt werden, welche beispielsweise bei Umstellung auf andere Behältergrößen erforderlich sind.

Alternativ dazu können gemäß Anspruch 7 mehrere Kameras zum Überstreichen verschiedener, beispielsweise überlappender Winkelbereiche vorgesehen sein.

Mit den beiden Möglichkeiten nach Anspruch 6 oder 7 lassen sich größere Winkelbereiche bei Aufrechterhaltung der erforderlichen Bildauflösung erfassen. Es können auch an anderen Stellen des Füllers die Füllpegel ermittelt werden, z.B. in schwappgefährdeten Umlenkbereichen am Auslaufstern.

Vorteilhaft sind die Merkmale des Anspruches 8 vorgesehen. Einrichtungen zur laufenden Ermittlung der Winkelposition des Füllers können in bekannter Weie vorgesehen sein, beispielsweise mittels Markierungen am Füllerumfang abtastenden Lichtschranken od. dgl. Wird zu jeder Zeit, also zu jeder durchzuführenden Bildauswertung die Füllerposition der Bildauswerteinrichtung eingegeben, so kann die Bildauswertarbeit erheblich reduziert werden, da die momentanen Winkelpositionen der Behälterplätze aus der eingegebenen Winkelposition des Füllers errechenbar ist.

Vorteilhaft sind die Merkmale des Anspruches 9 vorgesehen. Als Füllparameter kann beispielsweise die Füllgeschwindigkeit dienen oder der ermittelte Umfangswinkel bei Erreichen eines bestimmten Pegels. Als defekt ermittelte Füllorgane können für den weiteren Betrieb stillgesetzt werden. Leichtere Abweichungen können erfaßt und gespeichert werden zur Berücksichtigung bei der nächsten Maschinenüberholung. Auch kann nach Erreichen des Stoppegels überprüft werden, wie weit der Füllpegel im Behälter noch ansteigt. Dies gibt Aufschluß darüber, ob das Füllorgan überhaupt ordnungsgemäß schließt und wenn ja, wie stark noch Flüssigkeit nachläuft.

Vorteihaft sind die Merkmale des Anspruches 10 vorgesehen. Hierdurch bietet sich eine zusätzliche Überwachungsmöglichkeit, mit der z.B. die Behälterplätze platzender Flaschen ermittelt werden können. Da Behälter während ihres gesamten Umlaufes um den Füller platzen können, sind dazu vorteilhaft Kameras in ausreichender Zahl um den Füller herum angeordnet.

Vorteilhaft sind die Merkmale des Anspruches 11 vorgesehen. Eine Videokamera kann im Entlastungssektor des Füllers, also während der Druckentlastung im Behälter, den Schaumanstieg durch Verfolgung eines Behälters durch den Bildausschnitt ermitteln und danach den Entlastungsvorgang, beispielsweise durch Steuerung von Drosselorganen an den Füllorganen steuern. Es kann auch in dem Füller nachgeschalteten Behälteraustragungseinrichtungen, wie z.B. im Auslaufstern oder einem nachgeschalteten Transportband auf weiteren Schaumanstieg überwacht werden, so daß eine exakte Einstellung des Schaumes bis zum Behälterrand einreguliert werden kann, um das Austreten von Schaum und das Eindringen von Luft in den schaumgefüllten Kopfraum des Behälters zu verhindern. Hierdurch ergibt sich die Möglichkeit, die bei der erfindungsgemäßen Einstellung des Sollpegels erreichte Genauigkeit auch am Füllerauslauf aufrechtzuerhalten und gegen Schaum- und Schwappverluste zu sichern. Außerdem kann mit dieser Kamera eine Endkontrolle des Füllpegels vorgenommen werden.

In den Zeichnungen ist die Erfindung beispielsweise und schematisch dargestellt. Es zeigen:
- Fig. 1: eine stark schematisierte Draufsicht auf einen Getränkefüller mit mehreren Videokameras und
- Fig. 2: eine Videokamera mit ihrem Sichtfeld und dessen Anzeige auf einem Monitor.

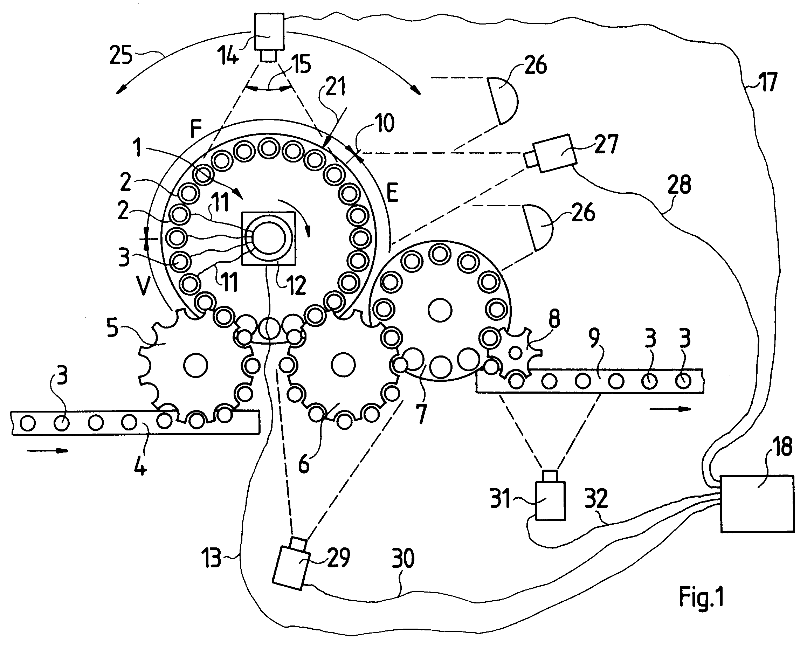

Fig. 1 zeigt in Draufsicht einen rotierenden Füller 1 üblicher Bauart, der zum Füllen von Getränken dient. Der Füller rotiert im Uhrzeigersinn. An seinem Umfang sind Behälterplätze 2 beabstandet vorgesehen. Dem Füller 1 werden Behälter 3 auf einem Transportband 4 über einen Einlaufstern 5 zugeführt.

Die auf den Behälterplätzen 2 um den Füller transportierten Behälter 3 verlassen den Füller 1 über einen Auslaufstern 6, von dem sie in üblicher Bauweise an einen rotierenden Verschließer 7 übergeben werden. Die Behälter 3 verlassen den Verschließer 7 mit einem Anslaufstern 8 über ein Transportband 9.

Die hier nicht näher interessierenden Einzelheiten des Füllers 1 sind weggelassen. Die Behälterplätze 2 sind beispielsweise in üblicher Bauart mit einem Teller versehen, auf dem die Behälter, beispielsweise Flaschen, stehen. Darüber befindet sich ein Füllorgan, das beispielsweise zum Füllen abgedichtet auf den Behälter abgesenkt wird. Die nicht dargestellten Füllorgane, von denen je eines einem Behälterplatz 2 zugeordnet ist, weisen die üblichen Einrichtungen auf, die beispielsweise im Falle des Abfüllens karbonisierter Getränke zunächst die Behälter mit Gas vorspannen, sodann durch Öffnen eines Steuerorganes Flüssigkeit in den Behälter einlassen, dann das Steuerorgan schließen und anschließend den Behälter druckentlasten, bevor er den Füller verlassen kann.

In Fig. 1 ist ein Füller 1 dargestellt, der die Behälter erst mit Druck vorspannt, dann füllt und anschließend entlastet. Die zugehörigen Winkelbereiche sind in Fig. 1 eingezeichnet, und zwar der Vorspannsektor V, der anschließende Füllsektor F und der nachfolgende Entlastungssektor E. Mit 10 ist das Ende des Füllsektors bezeichnet, also die Winkelposition am Füllerumfang, bei der die Füllung beendet sein muß, damit anschließend die erforderliche Zeit zur Druckentlastung der Behälter zur Verfügung steht.

Die Steuerorgane der Füllorgane an den einzelnen Behälterplätzen 2 sind beim dargestellten Füller 1 elektrisch ansteuerbar ausgebildet. Die Betätigung des Steuerorganes, also des die Flüssigkeit steuernden Ventiles, kann beispielsweise pneumatisch erfolgen. Zur Ermöglichung einer Fernsteuerung wird die Pneumatik jedoch elektrisch angesteuert. Die Ansteuerung erfolgt über Leitungen 11, die von den Behälterplätzen 2 zu einer Drehdurchführung 12 auf der Achse des Füllers 1 laufen und von dort über eine gemeinsame Steuerleitung 13 von außen angesteuert werden. Beispielsweise handelt es sich bei den Leitungen um Busleitungen, auf denen mit geeigneten Steueradressen die Behälterplätze 2 einzeln zum Öffnen und Schließen der Steuerorgane der zugehörigen Füllorgane angesteuert werden können. Über die Steuerleitungen 11, 13 können auch andere Funktionen der Füllorgane ferngesteuert werden, wie beispielsweise das Vorspannen im Vorspannsektor V und das Entlasten im Entlastungssektor E.

Die Behälter werden auf den Behälterplätzen 2 stehend während des Durchlaufens des Füllsektors F gefüllt. Dabei steigt ihr Füllpegel allmählich an, bis er gegen Ende des Füllsektors F den Stoppegel erreicht, bei dem das Steuerorgan des zugehörigen Füllorganes zu schließen ist, um unter Berücksichtigung eines eventuellen Nachlaufes den gewünschten Sollpegel im Behälter zu erreichen, auf den der Behälter gefüllt werden soll. Um das Erreichen des Stoppegels in den Behältern zu ermitteln und um dann über die Leitungen 11 und 13 ein Schließsignal zu dem entsprechenden Behälterplatz 2 zu geben, ist, wie Fig. 1 zeigt, eine erste Videokamera 14 außerhalb des Füllers 1 stationär angeordnet.

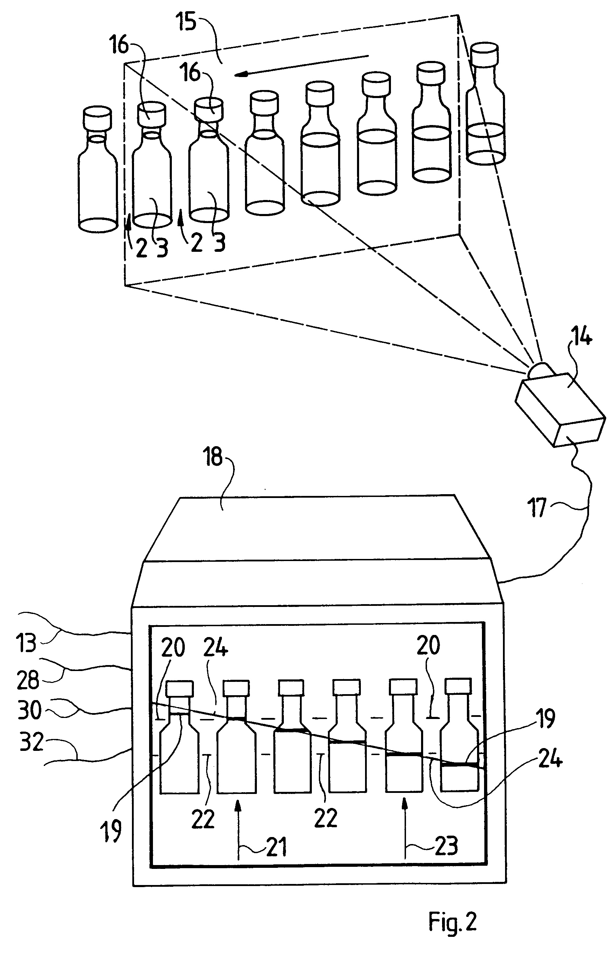

Die erste Videokamera 14 ist derart angeordnet, daß sie mit ihrem gestrichelt dargestellten Sichtfeld 15 (Fig. 2) auf Höhe der Behälterplätze 2 diese erfaßt, und zwar über einen Winkelbereich, der den Endbereich des Füllsektors F erfaßt, also den Bereich, in dem der Füllstopp auftreten soll.

Fig. 2 zeigt die erwähnte erste Videokamera 14 und ihr Sichtfeld 15, innerhalb dessen sechs Behälterplätze 2 liegen. Es sind die Behälter 3 ersichtlich, die abgedichtet gegen stark schematisiert dargestellte Füllorgane 16 gehalten sind. Die übrigen Teile der zugeordneten Behälterplätze 2 sind zur zeichnerischen Vereinfachung weggelassen. Die Richtung, in der die Behälter 3 durch das Sichtfeld 15 laufen, ist mit einem Pfeil angedeutet. Die Darstellung der Behälter 3 (Flaschen) und der darin eingezeichneten Füllpegel 19 ist so gewählt, daß sich die Verhältnisse übersichtlich darstellen lassen und entsprechen nicht unbedingt den realen Verhältnissen in einem Füller, bei dem im dargestellten Bereich des Sichtfeldes 15 nur noch ein relativ geringer Anstieg des Füllpegels 19 erfolgt.

Die erste Videokamera 14 ist über eine Leitung 17 an eine Bildverarbeitungseinrichtung 18 angeschlossen, die in Fig. 2 zu Zwecken der Erläuterung mit einem Monitor dargestellt ist, auf dem das von der ersten Kamera 14 erfaßte Sichtfeld 15 dargestellt ist.

Die Bildauswerteinrichtung 18 ist im erläuterten Ausführungsbeispiel so ausgebildet, daß sie die auf dem Monitorbild von rechts nach links durchlaufenden Behälter auf die Höhe des jeweiligen Füllpegels 19 hin auswertet, Sie überwacht die Behälter daraufhin, wann der Füllpegel 19 im Behälter mit einem Stoppegel 20 übereinstimmt, der auf dem Monitorbild mit einer gestrichelten Linie angedeutet ist. Im dargestellten Bild ist dies in der mit einem Pfeil angedeuteten Winkelposition 21 der Fall. Der Füllpegel des dort stehenden Behälters stimmt mit dem Stoppegel 20 überein. Die Bildauswerteinrichtung 18 erkennt dies und gibt über die zentrale Steuerleitung 13 ein Schließsignal an denjenigen Behälterplatz 2, der zur Zeit auf der Winkelposition 21 steht, die auch in Fig. 1 zu Zwecken der Erläuterung angedeutet ist.

Über die insoweit erläuterte einfachste Grundfunktion der Bildverarbeitungseinrichtung 18 hinaus kann diese noch weitere Aufgaben erfüllen. In Fig. 2 ist auf dem Monitorbild ein tiefer liegender Pegel 22 mit einer gestrichelten Linie angedeutet. Dieser Pegel wird in der Winkelposition 23 erreicht. Bei Erreichen dieses Füllpegels im Behälter kann die Bildverarbeitungseinrichtung 18 über die Steuerleitungen an den zugehörigen Behälterplatz ein Signal geben, mit dem das die Flüssigkeit steuernde Organ in eine Drosselstellung gebracht wird, so daß die restliche Füllung bis zum Stoppegel bei 21 langsamer und somit präziser erfolgt.

Die Bildauswerteinrichtung 18 kann Behälter auch nach Erreichen des Stoppegels, also auf dem Monitorbild der Fig. 2 links von der Winkelposition 21, betrachten und darauf kontrollieren, ob bei der Winkelposition 21 die Füllung wirklich stoppt und ob bzw. wieviel danach noch in den Behälter nachläuft.

Die Bildverarbeitungseinrichtung 18 kann auch so ausgebildet sein, daß sie die im Sichtfeld 15 erscheinenden Behälter zunächst daraufhin überwacht, ob die erreichten Füllpegel 19 überhaupt im richtigen Bereich liegen. Liegen sie zu niedrig, so hat der Füllvorgang zu spät begonnen, muß also nach früher verschoben werden. Die Bildverarbeitungseinrichtung 18 kann also über geeignete, nicht dargestellte Steuereinrichtungen den Anfang des Füllsektors F entsprechend verstellen. Sind die in das Sichtfeld 15 gelangenden Behälter bereits überfüllt, so muß der Beginn des Füllsektors F in die andere Richtung verstellt werden. Damit kann die Bildverarbeitungseinrichtung 18 selbstregelnd dafür sorgen, daß in dem von ihr betrachteten Sichtfeld 15 der Stoppegel 20 erreicht wird.

Diese Verstellung des Füllbeginnes kann auch einzeln den einzelnen Behälterplätzen 2 zugeordnet erfolgen derart, daß in jedem Behälter im Sichtfeld 15 der Füllpegel 19 ermittelt und entsprechend beim nächsten Umlauf des Füllers 1 das Öffnungssignal für das Steuerorgan des Füllorganes gegeben wird. Dadurch können die Füllorgane der einzelnen Behälterplätze 2 präzise derart angesteuert werden, daß der Stoppegel in jedem Behälter genau zu der auf dem Monitorbild in Fig. 2 markierten Winkelposition 21 erreicht wird. Die Winkelposition 21 wird dann vorteilhaft genau auf das Ende 10 des Füllsektors F gelegt, so daß dieser optimal genutzt wird.

Die Bildverarbeitungseinrichtung 18 muß die Zuordnung der im Sichtfeld 15 erfaßten Behälter zu den Behälterplätzen 2 des Füllers kennen. Sie kann dies beispielsweise selbst über geeignete Bildverarbeitung, indem sie die durchlaufenden Behälterplätze, beginnend beispielsweise mit einer Festmarkierung am Füller, laufend zählt oder indem sie z.B. an den Behälterpläten 2 angebrachte Nummern liest. Die dazu erforderliche erhebliche Bildverarbeitungskapazität kann verringert werden, wenn der Bildverarbeitungseinrichtung 18 die jeweilige exakte Winkelposition des Füllers 1 eingegeben wird. Diese kann außerhalb der Bildverarbeitungseinrichtung 18 mit geeigneten Mitteln erfaßt werden, beispielsweise über einen Getriebeabgriff oder über nicht dargestellte Lichtschranken, die bestimmte Merkmale, wie beispielsweise Vorsprünge am Füller, während des Durchlaufes erfassen und nach Auswertung der Drehgeschwindigkeit und der Winkelposition entsprechende Positionswerte an die Bildauswerteinrichtung 18 geben.

Dann kennt die Bildauswerteinrichtung 18 bei Betrachtung des Sichtfeldes 15 bereits die genauen Winkelpositionen der erfaßten Behälter 3 und muß diese auf dem Bild nicht mehr suchen, sondern kann sofort an den entsprechenden Stellen den Füllpegel 19 suchen und messen.

Die Bildauswerteinrichtung 18 kann auch für weitere Zwecke eingesetzt werden, beispielsweise zur Erkennung von Behälterplätzen 2, auf denen Behälter fehlen, beispielsweise geplatzte Flaschen.

Ferner kann die Bildauswerteinrichtung 18, wie in Fig. 2 auf dem Monitorbild angedeutet, bei Verfolgung von Flaschen über das Sichtfeld 15 den Anstieg des Füllpegels laufend ermitteln. Dies ist in Fig. 2 mit der schrägen gestrichelten Linie 24 angedeutet, die den Pegelverlauf darstellt. Hieraus kann die Füllgeschwindigkeit in einem Behälter ermittelt werden. Diese ergibt Aussagen über die ordnungsgemäße Funktion des Füllorganes.

Zur weiteren Einsparung von Bildverarbeitungsleistung kann beispielsweise für jeden Behälter bei Durchlauf durch das Sichtfeld 15 nur zweimal eine Bildauswertung vorgenommen werden, beispielsweise bei den beiden Winkelpositionen 21 und 23. Dann wird mit der schrägen Linie 24 der wahrscheinliche Verlauf des Anstieges des Füllpegels 19 auf den dazwischenliegenden Winkelpositionen interpoliert. Dadurch kann mit wenigen Bildauswertungen auf Erreichen des Stopppegels überwacht werden, auch wenn zu diesem Zeitpunkt gar keine Bildauswertung stattfindet.

Die Bildauswerteinrichtung 18 kann weitere Aufgaben übernehmen. Sie kann beispielsweise durch Überwachung der Füllgeschwindigkeit bei den einzelnen Füllorganen oder durch Überwachung auf korrekten Schließvorgang deren ordnungsgemäße Funktion überwachen und Fehlfunktionen melden, beispielsweise in einer Liste abspeichern, die bei der nächsten Wartung vom Monteur ausgewertet wird. Zeigt ein Füllorgan zu starke Abweichungen, so kann es stillgesetzt werden dadurch, daß ihm keine Öffnungssignale für das Steuerorgan gegeben werden oder es auf sonstige Weise abgeschaltet wird.

Wenn die Bildauswertungseinrichtung 18 so ausgebildet ist, daß sie den Füllbeginn steuert, kann eine Umstellung des Füllers 1 auf andere Behältergrößen, die abweichende Füllzeiten verlangen, automatisch geregelt werden. Durch entsprechende externe Eingabe an die Bildverarbeitungseinrichtung 18 kann auch der gewünschte Sollpegel verstellt werden, falls dies erforderlich ist.

Verschieben sich beispielsweise durch Umstellung auf eine andere Behältergröße die Füllzeiten sehr stark, verschiebt sich also das Ende 10 des Füllsektors F sehr stark, so kann es erforderlich sein, die erste Videokamera 14 am Umfang des Füllers zu verschieben, wie mit Pfeil 25 angedeutet. Es können aber auch weitere parallele Videokameras mit überlappendem Bildbereich vorgesehen sein, um eine Verbreiterung des Sichtfeldes 15 zu ergeben, ohne die Bildauflösung zu verringern.

Falls das Umgebungslicht nicht ausreicht, können Leuchten 26 zur Ausleuchtung des Sichtfeldes vorgesehen sein. Diese können auch erforderlich sein, wenn die Videokamera mit nicht sichtbarem Licht arbeitet, beispielsweise mit Infrarotlicht. Die gewählte Wellenlänge kann auf Durchlässigkeit des Behälters und des Getränkes optimiert sein, um den Füllpegel 19 für die Videokamera gut erkennbar zu machen.

Eine zweite Videokamera 27 ist zur Betrachtung des Entlastungssektors E stationär neben dem Füller 1 aufgestellt. Sie ist mit einer Leitung 28 an die Bildauswerteinrichtung 18 angeschlossen. Mit dieser zweiten Videokamera 27 wird während der Entlastung des Kopfraumes im Behälter 3 der Schaumanstieg durch entsprechende Bildauswertung ermittelt. Die Bildauswerteinrichtung 18 kann am Füller 1 entsprechend eingreifen, um zu starken Schaumanstieg zu verhindern.

Die Bildauswerteinrichtung 18 kann entsprechende Schalt- oder Steuersignale an die Behälterplätze 2 geben, um im Entlastungssektor E durch entsprechende Steuerung der Füllorgane den Entlastungsvorgang anzupassen, beispielsweise durch entsprechendes Ein- und Ausschalten der Entlastungsventile oder durch deren Drosselung.

Die zweite Videokamera 27 kann auch eine Endkontrolle des Füllpegels in den Behältern durchführen.

Eine dritte Videokamera 29, die über eine Leitung 30 an die Bildverarbeitungseinrichtung 18 angeschlossen ist, betrachtet den Auslaufstern 6, also den Bereich, in dem die nunmehr offenen Behälter unter hoher Umlenkbeschleunigung bewegt werden. Die starken Fliehkräfte können zum Ausschwappen von Flüssigkeit führen. Dies kann die Bildauswerteinrichtung 18 feststellen und entsprechend die Drehzahl des Füllers 1 verringern. In diesem Bereich kann auch auf Austreten von Schaum überwacht werden, um entsprechend die Druckentlastung in den Behältern anzupassen.

Schließlich kann eine vierte Videokamer 31, die über eine Leitung 32 an die Bildauswerteinrichtung 18 angeschlossen ist, vorgesehen sein, mit der das die fertig verschlossenen Behälter transportierende Band 9 erfaßt wird. Die Bildauswerteinrichtung 18 kann hier eine Endinspektion vornehmen unter Überwachung auf korrekten Verschluß der Behälter und unter Ermittlung des sich ergebenden Endfüllpegels.

Die in Fig. 1 dargestellten Platzierungen der Videokameras 14, 27, 29 und 31 können variieren. So können die Betrachtungsabstände geändert werden, wobei je nach zu erfassendem Bereich unterschiedliche Objektivbrennweiten verwendet werden können. Zusammen mit gegebenenfalls vorgesehenen Leuchten kann auf kontrastreiche Darstellung des Füllpegels oder des Schaumbildes optimiert werden. Im Falle der ersten Videokamera 14 und der zweiten Videokamera 27 kann beispielsweise auch die Kamera innerhalb des Umfangskreises des Füllers 1, auf dem die Behälterplätze 2 stehen, angeordnet sein, um nach außen blickend die Behälterplätze zu betrachten, falls dies konstruktiv möglich ist.

## Patentansprüche

1. Rotierender Getränkefüller (1) für durchsichtige Behälter (3), mit einer Vielzahl von auf seinem Umfang beabstandet umlaufenden Behälterplätzen (2) mit Füllorganen (16), deren den Getränkestrom steuernde Steuerorgane elektrisch ansteuerbar sind, und mit stationär neben dem Füller (1) aufgestellten Einrichtungen zur Messung des Füllpegels in den Behältern (3) im Bereich des Füllstopps (21) sowie zur Abgabe von Schließsignalen an die Steuerorgane derjenigen Behälterplätze (2), bei denen ein Behälter (3) einen Stoppegel (20) erreicht, der unter Berücksichtigung eines eventuellen Nachlaufes zu dem gewünschten Sollpegel führt, **dadurch gekennzeichnet**, daß als Meßeinrichtung wenigstens eine mit ihrem Sichtfeld (15) mehrere Behälterplätze (2) erfassende Videokamera (14) vorgesehen ist, die an eine zur Steuerung aller Steuerorgane ausgebildete Bildauswerteinrichtung (18) angeschlossen ist, welche unter Ermittlung der den erfaßten Behältern (3) jeweils zugeordneten Behälterplätze (2) die erfaßten Behälter (3) bei ihrem Durchlauf durch das Sichtfeld (15) verfolgend überwacht, dabei in wenigstens mehreren Winkelpositionen den jeweils erreichten Füllpegel (19) mißt und bei Erreichen des Stoppegels (20) in einem Behälter (3) das Schließsignal an das Steuerorgan des zugehörigen Behälterplatzes (2) abgibt.

2. Getränkefüller nach Anspruch 1, **dadurch gekennzeichnet**, daß die Bildauswerteinrichtung (18) wenigstens einen niedrigeren (22) als den Stoppegel (20) ermittelt zur Abgabe von Drosselsignalen.

3. Getränkefüller nach einem der vorhergehenden Ansprüche, **dadurch gekennzeichnet**, daß die Bildauswerteinrichtung (18) bei Erreichen des Stoppegels (20) in den Behältern (3) die Winkelposition (21) ermittelt und in Abhängigkeit von dieser den Startwinkel des Füllsektors (F) verstellt.

4. Getränkefüller nach Anspruch 3, **dadurch gekennzeichnet**, daß die bei Erreichen des Stoppegels (20) vorliegenden Winkelpositionen (21) einzelnen Behälterplätzen (2) zugeordnet ermittelt werden und in Abhängigkeit von diesen individuelle Öffnungssignale an die zugeordneten Steuerorgane bei dem nächsten Umlauf des Füllers (1) gegeben werden.

5. Getränkefüller nach Anspruch 4, **dadurch gekennzeichnet**, daß die Steuerung des Füllbeginns derart erfolgt, daß der Sollpegel am Ende (10) des nutzbaren Füllsektors (F) erreicht wird.

6. Getränkefüller nach einem der vorhergehenden Ansprüche, **dadurch gekennzeichnet**, daß eine Kamera (14) umfangsverstellbar zum Füller (1) angeordnet ist.

7. Getränkefüller nach einem der Ansprüche 1 bis 5, **dadurch gekennzeichnet**, daß mehrere Kameras (14, 27, 29, 31) zur Betrachtung von Winkelbereichen des Füllers (1) angeordnet sind.

8. Getränkefüller nach einem der vorhergehenden Ansprüche, **dadurch gekennzeichnet**, daß Einrichtungen zur laufenden Ermittlung der Winkelposition des Füllers (1) und zu deren Übertragung an die Bildauswerteinrichtung (18) vorgesehen sind.

9. Getränkefüller nach einem der vorhergehenden Ansprüche, **dadurch gekennzeichnet**, daß die Bildauswerteinrichtung (18) hinsichtlich der ermittelten Füllparameter außerhalb des Normbereiches liegende Füllorgane ermittelt.

10. Getränkefüller nach einem der vorhergehenden Ansprüche, **dadurch gekennzeichnet**, daß die Bildauswerteinrichtung (18) die Behälterplätze (2) auf das Vorhandensein von Behältern (3) überwacht.

11. Getränkefüller nach einem der vorhergehenden Ansprüche, **dadurch gekennzeichnet**, daß zum Füllen karbonisierter Getränke die Füllorgane (16) Einrichtungen zur Druckentlastung der Behälter (3) innerhalb eines an den Füllsektor (F) anschließenden Entlastungssektors (E) des Füllers (1) aufweisen und daß wenigstens eine stationär angeordnete, Behälterplätze (2) innerhalb des Entlastungssektors (E) und/oder in nachgeschalteten Behälteraustrageinrichtungen (6, 9) des Füllers betrachtende Videokamera (27, 29, 31) vorgesehen ist, mit Bildauswerteinrichtungen (18) zur Ermittlung des Schaumbildes der betrachteten Behälter (3) und zur Ableitung von Steuersignalen aus diesen zur Steuerung der Druckentlastungseinrichtungen und/oder der Füllerdrehzahl.

## Claims

1. Rotating beverage filling machine (1) for transparent containers (3) with a plurality of spaced, rotating container stations (2) on its periphery with filling elements (16), whose control elements controlling the beverage flow are electrically controllable, and with devices stationarily arranged adjacent the filling machine (1) for measuring the filling level in the containers (3) in the region of the filling stop (21) and for sending closing signals to the control elements of those container stations (2) at which a container (3) reaches a stop level (20) which results in the desired level taking account of possible further flow, characterised in that at least one video camera (14) is provided as the measuring device which views a plurality of container stations (2) in its field of view (15) and which is connected to an image analysing device (18) which is constructed to control all the control elements and which continuously monitors the viewed containers (3) as they pass through the field of view (15) whilst determining the container stations (2) associated with the viewed containers (3), measures the filling level (19) reached at at least a plurality of angular positions and issues the closing signal to the control element of the associated container station (2) when the stop level (20) is reached in a container (3).

2. Beverage filling machine as claimed in Claim 1, characterised in that the image analysing device (18) determines at least one level (22) lower than the stop level (20) for the issue of throttling signals.

3. Beverage filling machine as claimed in one of the preceding claims, characterised in that the image analysing device (18) determines the angular position (21) when the stop level (20) is reached in the containers (3) and shifts the starting angle of the filling sector (F) in dependence thereon.

4. Beverage filling machine as claimed in Claim 3, characterised in that the angular positions (21) at which the stop level (20) is reached are determined in association with individual container stations (2) and individual opening signals are given to the associated control elements in dependence on them during the next rotation of the filling machine (1).

5. Beverage filling machine as claimed in Claim 4, characterised in that the control of the commencement of filling is effected so that the desired level is reached at the end (10) of the usable filling sector (F).

6. Beverage filling machine as claimed in one of the preceding claims, characterised in that a camera (14) is arranged so as to be movable around the periphery of the filling machine (1).

7. Beverage filling machine as claimed in one of Claims 1 to 5, characterised in that a plurality of cameras (14, 27, 29, 31) are arranged to view angular regions of the filling machine (1).

8. Beverage filling machine as claimed in one of the preceding claims, characterised in that devices are provided for continuously determining the angular position of the filling machine (1) and for transmitting it to the image analysing device (18).

9. Beverage filling machine as claimed in one of the preceding claims, characterised in that the image analysing device (18) detects filling elements lying outside the normal region as regards the filling parameters which are detected.

10. Beverage filling machine as claimed in one of the preceding claims, characterised in that the image analysing device (18) monitors the container stations (2) for the presence of containers (3).

11. Beverage filling machine as claimed in one of the preceding claims, characterised in that for the purpose of filling with carbonated beverages the filling elements (16) have devices for depressurising the containers (3) within a depressurisation sector (E) of the filling machine (1) following the filling sector (F) and that at least one stationarily arranged video camera (27, 29, 31) is provided, which views container stations (2) within the depressurisation sector (E) and/or in downstream container discharge devices (6, 9) of the filling machine, with image analysing devices (18) for detecting the foam pattern of the viewed containers (3) and for deriving control signals from it for controlling the depressurisation devices and/or the speed of rotation of the filling machine.

## Revendications

1. Machine rotative (1) d'embouteillage de récipients transparents (3), comprenant un grand nombre de postes (2) à récipients qui tournent à distance sur son pourtour et sont munis d'organes d'emplissage (16) dont les organes de commande, commandant l'écoulement d'une boisson, sont activables électriquement ; et des dispositifs implantés de manière fixe à côté de la machine d'embouteillage (1), pour mesurer le niveau d'emplissage dans les récipients (3) dans la région de l'arrêt d'emplissage (21), ainsi que pour délivrer des signaux de fermeture aux organes de commande des postes (2) à récipients dans lesquels un récipient (3) atteint un niveau d'arrêt (20) qui, en tenant compte d'un éventuel égoutage, implique
le niveau de consigne souhaité, caractérisée par le fait qu'il est prévu, en tant que dispositif mesureur, au moins une caméra vidéo (14) englobant, par son champ de vision (15), plusieurs postes (2) à récipients, et raccordée à un dispositif (18) interprétateur d'images qui, réalisé pour commander tous les organes de commande, surveille avec effet de poursuite les récipients détectés (3), lors de leur passage à travers le champ de vision (15), en déterminant les postes (2) à récipients respectivement affectés aux récipients détectés (3) ; mesure alors, en au moins plusieurs positions angulaires, le niveau d'emplissage (19) respectivement atteint ; et délivre le signal de fermeture, à l'organe de commande du poste (2) à récipient associé, lorsque le niveau d'arrêt (20) est atteint dans un récipient (3).

2. Machine d'embouteillage selon la revendication 1, caractérisée par le fait que le dispositif (18) interprétateur d'images présente au moins un niveau (22) inférieur au niveau d'arrêt (20), déterminé en vue de délivrer des signaux d'étranglement.

3. Machine d'embouteillage selon l'une des revendications précédentes, caractérisée par le fait que, lorsque le niveau d'arrêt (20) est atteint dans les récipients (3), le dispositif (18) interprétateur d'images détermine la position angulaire (21) et règle, en fonction de cette dernière, l'angle de départ du secteur d'emplissage (F).

4. Machine d'embouteillage selon la revendication 3, caractérisée par le fait que les positions angulaires (21), présentes lorsque le niveau d'arrêt (20) est atteint, sont déterminées en étant affectées à des postes individuels (2) à récipients et, en fonction desdites positions, des signaux individuels d'ouverture sont délivrés aux organes de commande associés lors du tour de rotation suivant de la machine d'embouteillage (1).

5. Machine d'embouteillage selon la revendication 4, caractérisée par le fait que la commande du début de l'emplissage a lieu de façon telle que le niveau de consigne soit atteint à la fin (10) du secteur d'emplissage (F) utile.

6. Machine d'embouteillage selon l'une des revendications précédentes, caractérisée par le fait qu'une caméra (14) est agencée avec faculté de réglage périphérique par rapport à la machine d'embouteillage (1).

7. Machine d'embouteillage selon l'une des revendications 1 à 5, caractérisée par le fait que plusieurs caméras (14, 27, 29, 31) sont disposées en vue d'observer des zones angulaires de la machine d'embouteillage (1).

8. Machine d'embouteillage selon l'une des revendications précédentes, caractérisée par le fait que des dispositifs sont prévus pour déterminer en continu la position angulaire de la machine d'embouteillage (1), et pour la transmettre au dispositif (18) interprétateur d'images.

9. Machine d'embouteillage selon l'une des revendications précédentes, caractérisée par le fait que le dispositif (18) interprétateur d'images effectue une détermination d'organes d'emplissage situés en dehors de la plage normalisée quant aux paramètres d'emplissage établis.

10. Machine d'embouteillage selon l'une des revendications précédentes, caractérisée par le fait que le dispositif (18) interprétateur d'images surveille la présence de récipients (3) dans les postes (2) à récipients.

11. Machine d'embouteillage selon l'une des revendications précédentes, caractérisée par le fait que, en vue de l'embouteillage de boissons gazeuses, les organes d'emplissage (16) présentent des dispositifs de détente de pression des récipients (3) à l'intérieur d'un secteur de détente (E) de la machine d'embouteillage (1), directement attenant au secteur d'emplissage (F) ; et par le fait qu'il est prévu au moins une caméra vidéo (27, 29, 31) disposée de manière fixe, observant des postes (2) à récipients à l'intérieur du secteur de détente (E) et/ou dans des dispositifs (6, 9) implantés en aval dans la machine d'embouteillage pour l'évacuation des récipients, avec des dispositifs (18) interprétateurs d'images pour déterminer l'image de la mousse des récipients observés (3) et pour dériver des signaux de commande, à partir de ces derniers, en vue de commander les dispositifs de détente de pression et/ou la vitesse angulaire de la machine d'embouteillage.
